# DEMANDE DE BREVET EUROPEEN

(11) **EP 0 642 951 A1**
(43) Date de publication de la demande: **15.03.1995**
(21) Numéro de dépôt: 94402040.3
(22) Date de dépôt: 13.09.1994
(51) Int. Cl.: B60Q 1/14

(54) **Dispositif de commande automatique d'un projecteur émettant un rayonnement non visible, en particulier ultra-violet, pour véhicule automobile**

(30) Priorité: 15.09.1993 FR 9310977
(71) Demandeur: VALEO VISION, 93000 Bobigny (FR)
(72) Inventeur: Leleve, Joel, F-93800 Epinay Sur Seine (FR)
(74) Mandataire: Martin, Jean-Jacques

(57) **Abrégé**

L'invention concerne un dispositif de commande automatique pour un projecteur de véhicule automobile susceptible d'émettre un rayonnement non visible.

Il comprend des premiers moyens (6) de détection sensibles à la luminosité ambiante, des deuxièmes moyens (7) de détection sensibles à la vitesse du véhicule, et des moyens pour mettre le projecteur en service seulement lorsque la luminosité est inférieure à un seuil de luminosité donné (SL) et lorsque la vitesse du véhicule est supérieure à un seuil de vitesse donné (SV).

## Description

La présente invention concerne un dispositif de commande pour un projecteur de véhicule automobile susceptible d'émettre un rayonnement invisible, notamment ultra-violet, ainsi qu'un projecteur ultra-violet incorporant un tel dispositif.

Il est connu d'équiper un véhicule automobile de projecteurs émettant dans le domaine ultra-violet. De la sorte, des panneaux, bandes ou bornes de signalisation, etc... qui sont revêtus de substances fluorescentes ou analogues et qui se trouvent en avant du véhicule, même loin de celui-ci, apparaissent extrêmement clairement au conducteur pendant la circulation de nuit. En même temps, ces projecteurs n'éblouissent pas les conducteurs des véhicules roulant en sens inverse, et peuvent sans inconvénient émettre du rayonnement au-dessus de l'horizontale. De tels projecteurs viennent classiquement compléter des projecteurs de croisement émettant dans le visible au-dessous d'une telle coupure.

Les projecteurs ultra-violets (UV) peuvent soit consister en des projecteurs complémentaires, par exemple à intégrer dans un bouclier avant de véhicule, soit être intégrés à des projecteurs d'éclairage du véhicule. Ils sont généralement actionnés au moyen d'un commutateur situé sur le tableau de bord, distinct de la commande des projecteurs d'éclairage.

Un câblage spécifique est par conséquent nécessaire pour les commander.

On connaît par ailleurs des systèmes dans lesquels la mise en service des projecteurs UV n'est autorisée que lorsque la luminosité ambiante est faible. On évite ainsi d'allumer ces projecteurs de jour, lorsqu'ils n'ont aucune utilité. Le câblage est encore compliqué par le fait qu'il faut associer à la commande manuelle précité un dispositif d'interdiction d'allumage équipé par exemple d'un composant semiconducteur photosensible.

Par ailleurs, une autre difficulté avec cette commande manuelle réside dans un risque d'insolation notamment des piétons pouvant stationner longuement devant le véhicule lorsqu'il est à l'arrêt.

Plus généralement, les sources UV présentent une durée de vie relativement courte, et consomment une énergie électrique importante, et il est souhaitable de ne les mettre en service que lorsque l'utilité des projecteurs UV est réelle.

La présente invention vise ainsi à proposer, dans un projecteur de véhicule automobile émettant un rayonnement invisible tel que des UV, une commande d'allumage/extinction de ce projecteur qui pallie les inconvénients précités tout en permettant d'équiper un véhicule d'un tel projecteur sans qu'il soit nécessaire de prévoir un câblage spécifique entre le tableau de bord et le projecteur.

A cet effet, la présente invention a pour objet un dispositif de commande automatique pour un projecteur de véhicule automobile susceptible d'émettre un rayonnement non visible, caractérisé en ce qu'il comprend des premiers moyens de détection sensibles à la luminosité ambiante, des deuxièmes moyens de détection sensibles à la vitesse du véhicule, et des moyens pour mettre le projecteur en service seulement lorsque la luminosité est inférieure à un seuil de luminosité donné et lorsque la vitesse du véhicule est supérieure à un seuil de vitesse donné.

Le dispositif est avantageusement intégré au projecteur, et s'applique tout particulièrement à un projecteur émettant un rayonnement ultra-violet.

De façon préférée, les premiers moyens de détection comprennent un élément photosensible associé à une lentille, et visent dans une direction ascendante en avant du véhicule, tandis que les deuxièmes moyens de détection comprennent un élément photosensible associé à une lentille, et visent dans une direction plongeante en avant du véhicule. De plus, les deuxièmes moyens de détection comprennent avantageusement un circuit de traitement apte à délivrer un signal représentatif de la fréquence moyenne de variation de la quantité de lumière reçue par l'élément photosensible.

En variante, les deuxièmes moyens de détection comprennent un dispositif de contact mobile sensible au vent relatif auquel le projecteur est exposé.

L'invention a également pour objet un projecteur pour véhicule automobile, susceptible d'émettre un rayonnement ultra-violet, caractérisé en qu'il est équipé d'un dispositif de commande tel que défini ci-dessus.

Ce projecteur peut constituer un projecteur de route comprenant une lampe à décharge, auquel cas il comprend en outre un filtre ne laissant passer que le rayonnement ultraviolet et des moyens sensibles au dispositif de commande pour sélectivement mettre en place le filtre au droit de la lampe et escamoter ledit filtre.

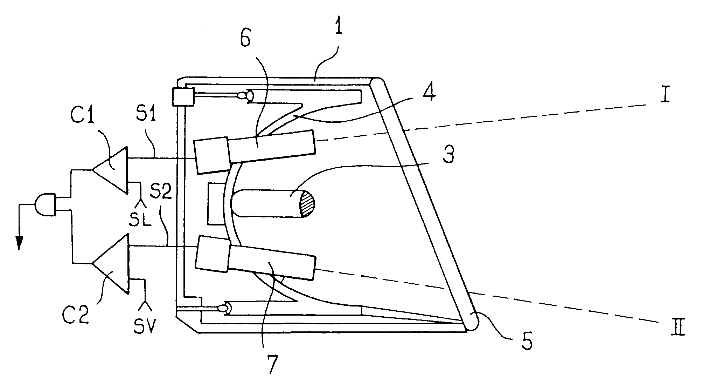

D'autres caractéristiques, buts et avantages de la présente invention ressortiront de la description suivante, donnée à titre d'exemple et sans caractère limitatif, en regard du dessin annexé illustrant une vue schématique en coupe longitudinale d'un détail d'un projecteur UV incorporant un dispositif de commande automatique selon l'invention.

Le projecteur ou bloc optique représenté comprend, de façon classique en soi, un boîtier 1 à l'intérieur duquel est placé un réflecteur 4 par exemple du genre parabolique portant une lampe 3 émettant dans le domaine ultraviolet, de préférence des UVA. Le faisceau concentré engendré par la lampe 3 et le réflecteur 4 traverse une glace de fermeture 5.

Ce faisceau UV irradie des panneaux, bandes ou bornes de signalisation que l'on rencontre sur la chaussée ou à proximité de celle-ci. Des substances fluorescentes incorporées à ces éléments de signalisation émettent à leur tour en direction du véhicule un rayonnement visible. On peut ainsi visualiser les éléments de signalisation situées hors de portée des projecteurs d'éclairage.

Par ailleurs, le bloc optique 1 comprend également des moyens d'allumage et d'extinction automatique de la lampe 3. Ces moyens comprennent un premier détecteur 6 apte à délivrer un premier signal électrique qui varie en fonction de la luminosité ambiante et un deuxième détecteur 7 apte à engendrer un deuxième signal qui varie en fonction de la vitesse du véhicule.

Dans le présent exemple de réalisation, le détecteur 6 comprend une cellule photo-électrique du genre phototransistor, associée à une circuiterie de polarisation et d'amplification, pour engendrer une tension dont la valeur est proportionnelle à la quantité de lumière visible reçue. Le détecteur 6 comprend également une lentille convergente coopérant avec le photo-transistor pour définir un axe de visée I dirigé vers le haut. On évite de la sorte que le détecteur 6 soit sensible à la lumière provenant soit de la route éclairée par les projecteurs d'éclairage du véhicule, soit des projecteurs d'éclairage des véhicules roulant en sens inverse.

De plus, un circuit de traitement peut être prévu pour éliminer du signal délivré par la cellule les composantes parasites causées par exemple par la présence d'un éclairage urbain, etc... Ce traitement peut consister en un simple filtrage passe-bas. On obtient ainsi un signal électrique qui donne une information sur la luminance ambiante.

Le détecteur de vitesse 7 comprend des moyens analogues à ceux du détecteur 6, mais pointant en direction de la route en avant du véhicule, dans le champ d'éclairage des projecteurs de croisement de celui-ci, selon la direction de visée indiquée en II.

Ces moyens sont complétés par un circuit de traitement approprié. On comprend que, dans un tel détecteur visant vers la route, plus la fréquence moyenne de variation de la lumière rétrodiffusée par la route est élevée, plus le véhicule roule vite. Ainsi le circuit de traitement peut consister par exemple en un circuit analysant le spectre des variations de la lumière reçue par le photo-transistor, déterminant la fréquence moyenne de variation, et convertissant cette fréquence en une tension continue de valeur proportionnelle. Cette tension est ainsi proportionnelle à la vitesse du véhicule.

Les tensions continues délivrées par les détecteurs 6 et 7, notées S1 et S2, sont appliquées respectivement aux entrées de deux comparateurs C1 et C2.

Le comparateur C1 compare le signal S1 de luminosité ambiante avec une tension de seuil de luminosité SL, et délivre par exemple un niveau logique "1" si la tension S1 est inférieure à SL.

Le comparateur C2 compare le signal S2 de vitesse du véhicule avec une tension de seuil de vitesse SV, et délivre par exemple un niveau logique "1" si la tension S2 est supérieure à SV.

Les sorties des comparateurs C1 et C2 sont appliquées à l'entrée d'une porte logique "ET", qui ne délivre un niveau logique "1" que lorsque les sorties des deux comparateurs sont à "1". La sortie de la porte "ET" est utilisée pour commander automatiquement l'allumage de la source UV 3, par exemple via un relais ou un semiconducteur de puissance (non représenté), lorsqu'à la fois la luminosité ambiante est inférieure à un seuil et que la vitesse du véhicule est supérieure à un seuil. Inversement, dès que l'une des deux conditions n'est plus remplie, le circuit éteint la source UV 3.

On notera ici que le seuil de vitesse SV correspond avantageusement à une vitesse du véhicule de l'ordre de 20 kilomètres/heures.

La valeur du seuil de luminosité est choisie pour correspondre à la tombée de la nuit.

Le circuit logique décrit ci-dessus est très avantageusement intégré au boîtier de projecteur.

Ainsi la présente invention propose une commande de projecteur UV entièrement automatique et intégrée au projecteur, auquel il suffit d'appliquer la tension continue du réseau électrique de bord. Aucun câblage spécifique n'étant nécessaire, on peut donc ajouter très facilement un tel projecteur à un véhicule pré-existant non spécialement équipé. En outre, la durée de vie de la source UV est préservée, et tout risque d'insolation des personnes pour cause de station prolongée devant le véhicule est évité.

Selon un autre mode de réalisation de l'invention, non représenté, le rayonnement UV peut être obtenu au moyen d'un filtre transparent seulement aux UV, placé sélectivement devant une lampe à décharge d'un projecteur de route. Un tel filtre peut être sélectivement mis en place devant la lampe ou escamoté par exemple à l'aide d'un moyen du genre électro-aimant, commandé par la sortie du dispositif de commande qui a été décrit ci-dessus.

Dans ce cas, le circuit logique détermine d'une part si la luminosité ambiante est inférieure au seuil SL et si la vitesse du véhicule est supérieure au seuil SV, et d'autre part si le conducteur a mis ou non les projecteurs de route en service. Si les projecteurs de route sont éteints, alors le circuit logique commande le circuit ballast de la lampe à décharge pour allumer celle-ci, et positionne le filtre au droit de la lampe. Si les projecteurs de route sont en service, alors aucune opération n'est effectuée, et ceux-ci restent en service. En revanche, si le conducteur met ses projecteurs de route hors-service pendant que les deux premières conditions restent remplies, alors on prévoit avantageusement que le circuit logique commande le ballast pour laisser la lampe allumée, et positionne alors le filtre UV au droit de ladite lampe, pour amener le projecteur de route à émettre un rayonnement UV de longue portée. Le filtre sera escamoté dès que le conducteur remettra ses projecteurs de route en service.

Le dispositif de commande selon la présente invention peut également être utilisé avantageusement pour commander des sources infra-rouges qui sont classiquement prévues dans certains véhicules automobiles équipés de systèmes de vision faisant appel à une caméra sensible dans l'infrarouge.

Bien entendu, la présente invention n'est pas limitée aux formes de réalisation décrites, et différentes modifications à la portée de l'homme du métier pourront y être apportées conformément à son esprit.

En particulier, les moyens de détection de vitesse intégrés au projecteur tels qu'on les a décrits plus haut peuvent être remplacés par d'autres moyens équivalents. Par exemple, on peut prévoir un contact mobile disposé dans un filet d'air provoqué dans un canal prévu dans le projecteur par le vent relatif auquel le véhicule est exposé, ce contact se fermant sous l'action dudit filet d'air lorsque celui-ci a atteint une vitesse déterminée.

## Revendications

1. Dispositif de commande automatique pour un projecteur de véhicule automobile susceptible d'émettre un rayonnement non visible, caractérisé en ce qu'il comprend des premiers moyens (6) de détection sensibles à la luminosité ambiante, des deuxièmes moyens (7) de détection sensibles à la vitesse du véhicule, et des moyens pour mettre le projecteur en service seulement lorsque la luminosité est inférieure à un seuil de luminosité donné (SL) et lorsque la vitesse du véhicule est supérieure à un seuil de vitesse donné (SV).

2. Dispositif de commande selon la revendication 1, caractérisé en ce qu'il est intégré au projecteur.

3. Dispositif de commande selon la revendication 1 ou 2, caractérisé en ce que le rayonnement non visible est un rayonnement ultra-violet.

4. Dispositif de commande selon l'une des revendications 1 à 3, caractérisé en ce que les premiers moyens de détection (6) comprennent un élément photosensible associé à une lentille, et visent dans une direction ascendante en avant du véhicule.

5. Dispositif selon l'une des revendications 1 à 4, caractérisé en ce que les deuxièmes moyens de détection (7) comprennent un élément photosensible associé à une lentille, et visent dans une direction plongeante en avant du véhicule.

6. Dispositif selon la revendication 5, caractérisé en ce que les deuxièmes moyens de détection comprennent un circuit de traitement apte à délivrer un signal représentatif de la fréquence moyenne de variation de la quantité de lumière reçue par l'élément photosensible.

7. Dispositif selon l'une des revendications 1 à 4, caractérisé en ce que les deuxièmes moyens de détection comprennent un dispositif de contact mobile sensible au vent relatif auquel le projecteur est exposé.

8. Projecteur pour véhicule automobile, susceptible d'émettre un rayonnement ultra-violet, caractérisé en qu'il est équipé d'un dispositif de commande selon l'une quelconque des revendications 1 à 7.

9. Projecteur selon la revendication 8, caractérisé en ce qu'il constitue un projecteur de route comprenant une lampe à décharge, et en ce qu'il comprend en outre un filtre ne laissant passer que le rayonnement ultraviolet et des moyens sensibles au dispositif de commande pour sélectivement mettre en place le filtre au droit de la lampe et escamoter ledit filtre.
